(19) Europäisches Patentamt
European Patent Office
Office européen des brevets

(11) **EP 4 006 791 B1**

(12) **EUROPEAN PATENT SPECIFICATION**

(45) Date of publication and mention
of the grant of the patent:
**27.12.2023 Bulletin 2023/52**

(21) Application number: **19938326.6**

(22) Date of filing: **22.07.2019**

(51) International Patent Classification (IPC):
***G06N 20/10*** *(2019.01)*

(52) Cooperative Patent Classification (CPC):
**G06N 20/10**

(86) International application number:
**PCT/ES2019/070510**

(87) International publication number:
**WO 2021/014029 (28.01.2021 Gazette 2021/04)**

(54) **METHOD FOR DETECTING ANOMALIES IN DATA COMMUNICATIONS**

VERFAHREN ZUR ERKENNUNG VON ANOMALIEN BEI DER DATENKOMMUNIKATION

PROCÉDÉ POUR DÉTECTER DES ANOMALIES DANS DES COMMUNICATIONS DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.06.2022 Bulletin 2022/22**

(73) Proprietor: **TELEFÓNICA IOT & BIG DATA TECH, S.A.**
**28050 Madrid (ES)**

(72) Inventors:
- **BARBADO GONZÁLEZ, Alberto**
  **28013 MADRID (ES)**
- **PEREZ ROSADO, Federico**
  **MADRID 28013 (ES)**
- **ALONSO BAIGORRI, Pedro, Antonio**
  **28013 MADRID (ES)**
- **SÁNCHEZ PÉREZ, Álvaro**
  **28013 MADRID (ES)**

(74) Representative: **Herrero & Asociados, S.L.**
**Edificio Aqua - Agustín de Foxá, 4-10**
**28036 Madrid (ES)**

(56) References cited:
**WO-A1-2019/043163      WO-A1-2019/043163**
**CN-A- 105 847 598      US-A1- 2019 050 690**
**US-A1- 2019 188 212**

- **WANG SIQI ET AL: "Hyperparameter selection of one-class support vector machine by self-adaptive data shifting", PATTERN RECOGNITION, vol. 74, 1 February 2018 (2018-02-01), pages 198-211, XP085273142, ISSN: 0031-3203, DOI: 10.1016/J.PATCOG.2017.09.012**
- **Manuel Martin Salvador: "Automatic and adaptive preprocessing for the development of predictive models", Ph.D Thesis, 1 April 2017 (2017-04-01), pages 1-181, XP055438217, Retrieved from the Internet: URL:http://eprints.bournemouth.ac.uk/29442/1/SALVADOR, Manuel Martin_Ph.D._2017.pdf [retrieved on 2018-01-04]**
- **WANG SIQI et al.: "Hyperparameter selection of one-class support vector machine by self-adaptive data shifting", PATTERN RECOGNITION ELSEVIER, GB . Impedovo Sebastiano; Liu Cheng-Lin; Impedovo Donato; Pirlo Giuseppe, vol. 74 , pages 198-211, XP085273142, ISSN: 0031-3203, DOI: 10.1016/j.patcog. 2017.09.01 2**
- **XIAO YINGCHAO et al.: "Parameter Selection of Gaussian Kernel for One-Class SVM", IEEE Transactions on Cybernetics, vol. 45, no. 5, 5 January 2015 (2015-01-05), pages 927-939, XP011578564, Piscataway, NJ, USA ISSN: 2168-2267, DOI: 10.1109/TCYB.2014.2340433**

EP 4 006 791 B1

- LIU SHUANGYIN et al.: "A hybrid approach of support vector regression with genetic algorithm optimization for aquaculture water quality prediction", MATHEMATICAL AND COMPUTER MODELLING, vol. 58, no. 3, 1 December 2011 (2011-12-01), pages 458-465, XP028569153, OXFORD, GB ISSN: 0895-7177, DOI: 10.1016/j.mcm. 2011.11.02 1

**Description**

**OBJECT OF THE INVENTION**

The present invention is applied to the detection of anomalies in traffic of communication networks, for example, for cybersecurity purposes.

More particularly, the present invention relates to a method for detecting anomalies in data communications, especially applicable to call traffic received by the lines of a Call Center.

**BACKGROUND OF THE INVENTION**

In data mining or data exploration of statistics, anomaly detection (or outlier detection) is the identification of rare items, events, or observations that raise suspicion by differing significantly from the majority of the data. Normally, anomalous elements translate into some kind of problem, such as bank fraud, a structural defect, medical problems, errors in a text, or an intrusion in a communication network.

Currently, there are solutions based on Artificial Intelligence (AI) that provide an analysis or insights on the data of a communications system to help the system designer and/or communications provider to optimize said communications and contribute to decision-making based on said data ("data-driven").

In this context and for a Call Center (CC, acronym for the term "Call Center", in English), there is a module for analyzing incoming calls on CC lines, wherein information and predictions are obtained from the information of the calls that are received on those lines. Thus, the input data, in this case, is the data for each client belonging to the provider of the communication lines of the CC, data that collects the information of the traffic of calls to said lines of the CC.

In fact, one of the main problems with Machine Learning (ML) models used in AI and specifically, even more, with Unsupervised Learning models is the lack of interpretability of the conclusions reached by the AI system, which leads to labeling them as "black boxes".

Explainable AI or xAI (Explainable Artificial Intelligent) refers to AI techniques that are trusted and easily understood by humans.

In the AI scientific literature on explainability ("Explaining Explanations: An Overview of Interpretability of Machine Learning," by Gilpin, LH et al., 2018 IEEE 5th International Conference on Data Science and Advanced Analytics (DSAA), pp. 80 - 89, 2018, October, and "A survey of methods for explaining black box models" by Guidotti, R. et al., ACM computing surveys (CSUR), 51(5), 93, 2018.) a model of explanations is said to be:

- Local explanation model, because it provides justifications as to why each specific point considered as an anomaly is anomalous.

- Specific explanation model, because the explanations are generated using information from the model itself used for anomaly detection, and from another one.
- User-friendly explanation model, because they are explanations designed so that any user of the application can understand them, for example, with displaying elements.
- Model of counterfactual explanations, because they not only indicate why a point is anomalous, but also show what should have happened so that said point would not have been anomalous, and vice versa.

Also in the scientific literature (Time-series Novelty Detection Using One-class Support Vector Machines", by Junshui Ma and Simon Perkins, 2003) is the use of the unsupervised algorithm OneClass SVM (SVM stands for Support Vector Machine) for the detection of anomalies in temporal data and has been validated by applied scientific research, WANG SIQI ET AL: "Hyperparameter selection of one-class support vector machine by self-adaptive data shifting",PATTERN RECOGNITION, vol. 74, 1 February 2018 (2018-02-01), pages 198-211 discloses a further machine for anomaly detection.

The objective technical problem that arises is therefore to provide a method to detect anomalies with unsupervised learning that guarantees the transparency of the unsupervised models and that is used to generate local explanations for each of the points labeled as communication anomalies.

**DESCRIPTION OF THE INVENTION**

The present invention serves to solve the problem mentioned above, providing a method to detect anomalies in the communications of a system, which also incorporates explicability techniques on Artificial Intelligence (AI) to show in an understandable way the reason for the decisions made in the system, using a model of explanations that shall be: local, specific, friendly and counterfactual. The explanations model is an unsupervised AI learning model that includes the generation, for each anomaly point detected, of easily and visually understandable explanations, using the model's own and specific information as a basis. In addition, it includes counterfactual information that informs about what should have happened so that said point of anomaly had not been identified as such.

One aspect of the invention relates to a computer-implemented method for detecting anomalies in data communications comprising:

- obtaining a set of data points from a relational database, wherein each data point is defined by a datum that is a continuous numeric variable and at least one categorical variable (or category of datum) that is a discrete numeric variable;

- preprocessing the obtained set of data points to introduce the set of data points into a non-parametric statistical model, standardizing the data and, after having standardized the data, extracting at least one combination of categorical variables;
- performing a grid search to obtain at least one combination of hyperparameters with which to train the non-parametric model;
- applying a kernel radial basis function (RBF) to identify anomalies in a given application time period, using a non-linear decision threshold and upper and lower limits obtained by a statistical model to detect anomalies in a historical time period containing the given application time period, wherein the statistical model can be a non-parametric model or a parametric model, and wherein the model persists the upper and lower limits obtained in the relational database;
- if the trained statistical model is the non-parametric model, the decision threshold used is calculated according to the obtained hyperparameters, and the non-parametric model calculates a distance from the continuous variable of the standardized data to the value of the decision threshold calculated for said same variable and particularized for each combination of values of the categorical variables of the datum;
- displaying in a graphical user interface the results obtained from comparing the upper and lower limits obtained with statistical information associated with the set of data points, wherein the statistical information is the distance calculated for each data and data category, if the model is the nonparametric model.

A final aspect of the invention relates to a computer program product that comprises a computer program code adapted to carry out the method described above, when said program code is executed in a computer device or programmable electronic device that can be: computer, a digital signal processor (DSP), a field-programmable gate array (FPGA), an application-specific integrated circuit, a microprocessor, a microcontroller or any other form of programmable hardware. Also provided is a non-transient digital data storage medium for storing a computer program comprising instructions that cause a computing device executing the program to perform the method described above.

The advantages of the present invention compared to the previous state of the art are fundamentally:

- It is a generic method of detecting anomalies in data communications and generating explanations by AI that is applied to any type and distribution of data.
- It allows detecting anomalies using features such as holidays (calendars) or other variables that can influence communications.
- The detection of anomalies is performed with a decision threshold that can be non-linear and, therefore, allows a more precise classification of them.
- Unlike other applicable methods, such as the normal distribution method that assumes a normal distribution of the data for a defined data category, the method of the present invention jointly considers the entire hyperspace of points and detects anomalies by analyzing a point in reference to all the others, not to a subset of them.
- It implies less execution time, since it is not necessary to impute the days that could be missing in the time series, unlike other methods, since the algorithm works on the hyperspace of the points that are available, regardless of the fact that there may be any missing.
- By using a model based on an SVM algorithm that works only with support vectors, the computational cost is lower than that of other similar models (unsupervised algorithms of "isolation forests"; algorithm of the local outlier factor -LOF).
- The proposed method uses an approach that unravels unsupervised models to create a simple explanation that can help anyone interpret and understand the system's decisions, so the method is aligned with the principles of responsible AI.

BRIEF DESCRIPTION OF THE FIGURES

Below there is provided a very brief description of a series of drawings that help to better understand the invention and that are expressly related to an embodiment of said invention that is presented as a non-limiting example thereof.

FIGURE 1.- Shows a graph with the data points for a specified categorical feature, a feature that in a possible embodiment of the invention refers to each day of the week.

FIGURE 2.- Shows a graph with the inferred limits for each categorical value of Figure 1 above.

FIGURE 3.- Shows a flowchart of the method for detecting anomalies, according to a preferred embodiment of the invention.

FIGURE 4.- Shows examples of decision thresholds obtained for possible use cases of the invention.

FIGURE 5.- Shows a graphical representation of the utility function for different hyperparameters calculated by the anomaly detection method, according to a possible use case of the invention.

FIGURE 6.- Shows an example of display in a user interface of the results of the analysis of the anomalies detected by the method.

## PREFERRED EMBODIMENT OF THE INVENTION

A method for detecting anomalies and generating understandable explanations with unsupervised learning, applicable to call traffic of a Call Center, CC.

This method can define non-linear thresholds that try to separate the points considered non-anomalous from those considered as anomalies. That threshold depends on the type of kernel function used. For example, using the popular RBF (Radial Basis Function) kernel, the threshold is circular/spherical and attempts to encapsulate non-anomalous points within it and leave out anomalies.

Although the data usually have a normal distribution in the scenario of the calls received at the Call Center, CC, in order to better generalize, an agnostic solution is defined with respect to the data distribution that uses a non-parametric model and that takes into account the data space as a whole for anomaly detection.

In a preferred embodiment, the non-parametric model uses the OneClass SVM unsupervised algorithm, through its implementation in the Scikit-learn library, which is a free software machine learning library used in the Python programming language.

The algorithm used has as input a matrix with the different features involved in the specification of each data point and separates the anomalous data points from the others in a hyperspace where the points are plotted.

In particular, for the customer calls module of a CC, the data used is a univariate time series wherein the numerical variable is the total number of calls received in one day. Along with that, some features are considered for each data point, such as the day of the week for that number of calls (Sunday, Monday, ...) or the month. Thus, data points can be thought of as a combination of a numeric variable and a combination of other categorical features (for example, the day of the week). The algorithm is intended to be able to work with other features if they are relevant (for example, the time of that total calls if the defined data granularity is hourly or shorter, instead of daily, or if that day is a holiday or not for a given locality). These features can be any type of discrete variable that is related to the number of calls received. Discrete variables can be either ordinal (for example, day of the week) or binary (for example, holiday yes/no). In another embodiment, it is possible to work with other non-ordinal categorical variables (for example, classifications of certain events, such as different marketing campaigns carried out by a company that receives calls in its CC), first converting the variables to binary, for example, doing "one-hot" encoding.

Another example can be the following:

- Data: 55 calls received on a communication line in the time slot from 4:00 p.m. to 4:30 p.m. on 05/06/2019.
- Continuous variable: 55 calls received.
- Features: day of the week = 1, day = 6, month = 5, hour = 16.

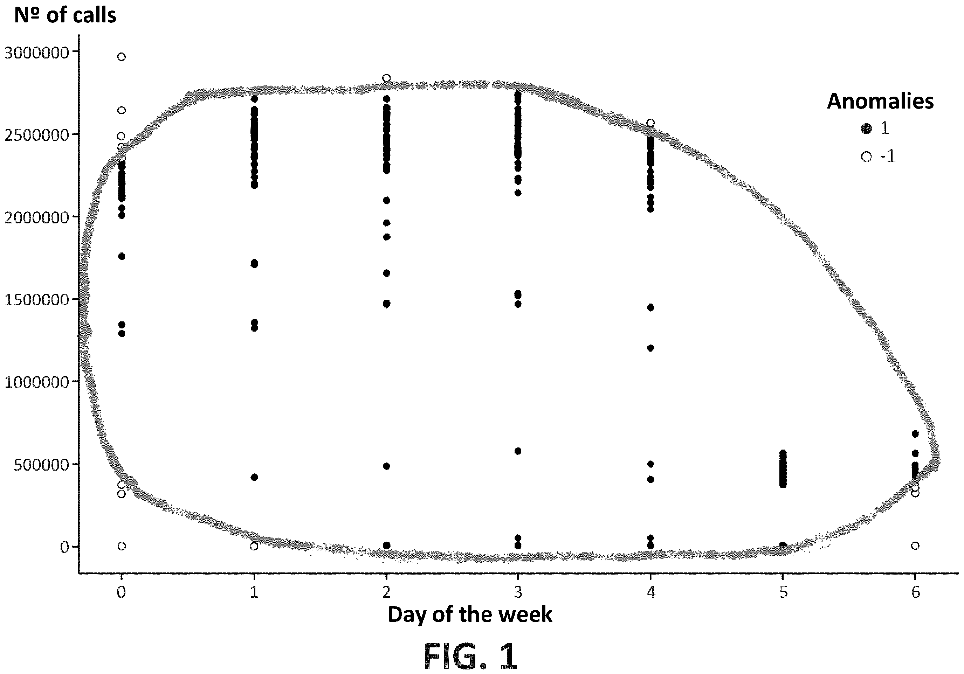

An example of a display that uses a numeric variable and a day of the week as a categorical feature is shown in Figure 1, wherein the data points for each day of the week (with values between 0 and 6) are plotted along with the values, e.g., binary values, -1 or +1, to identify their anomalies (the value "+1" corresponding to "no anomaly", and the value "-1" corresponding to "anomaly"). The vertical axis of Figure 1 represents the variable on which it is desired to detect if there are anomalies; in the example, it refers to the number of calls. Anomaly detection is done using an RBF kernel. As shown in Figure 1, there is a spherical/elliptical decision threshold that encapsulates the data points that are not considered an anomaly.

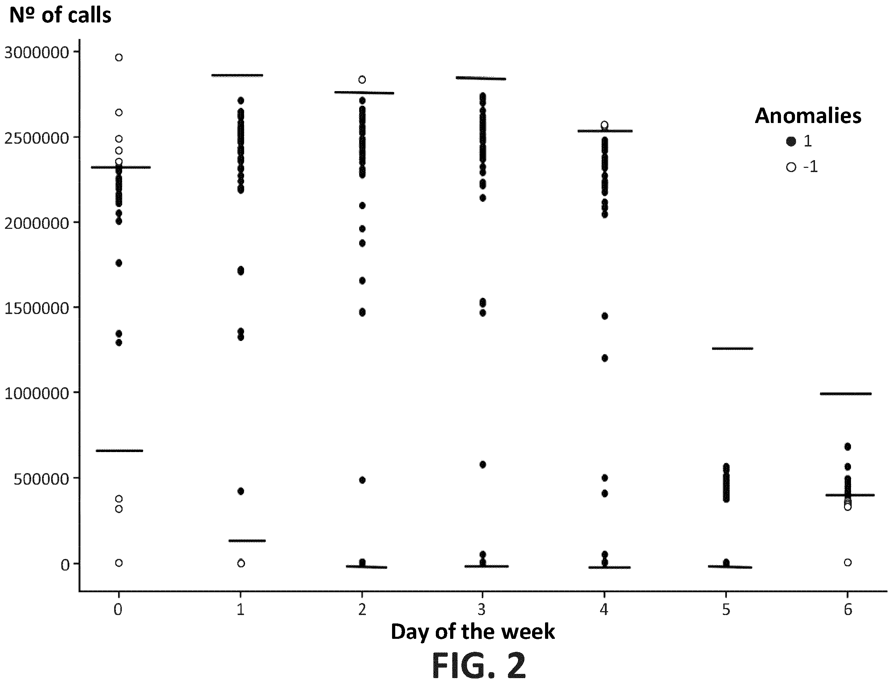

The unsupervised algorithm obtains the numerical values that correspond to each combination of values of the categorical variables involved, along with the distance of said points from the decision threshold. With this, it calculates the value of said decision threshold for each combination of categorical variables and thus defines lower and upper limits that help to display when a point can be considered an anomaly and how much of an anomaly it is (quantifying its distance from the limit corresponding to a data point with the same value of categorical variables). The lower and upper limits are inferred using all available historical data to then quantify data anomalies over a period of interest to the application, for example, the last month, as shown in Figure 2. That is, on the one hand, the method uses a limited application period (for example, one month) and on the other hand, a historical time period, which contains at least the aforementioned application period. The method uses all historical data (collected in the historical time period) to get patterns and uses the application period (last month) to get sample data to detect anomalies. Figure 2 illustrates how a limit, represented by the upper and lower black horizontal line, can be inferred for each of the categorical values using the decision threshold information.

The library used to apply the OneClass SVM technique provides the distance of the complete data point (with all its components) from the decision threshold. This distance value is transformed, so that it is expressed solely as a function of the continuous numerical variable, into a value of the distance of the numerical variable (total calls) with respect to the decision threshold and the transformation is made for each one of the concrete combinations of values of the categorical variables. In this way the value of the limits expressed as a function of the numerical variable is obtained:

- Case 1: When there are anomalies above and below the non-anomalous points (as occurs for the day of the week "0" in Figures 1 and 2). In this case we proceed to calculate the upper limit as:

$$l\_max = p + abs(p-q)*(d1/(d1+d2))$$

wherein l_max is the upper limit, p is the value of the upper numerical variable of the non-anomalous point closest to the anomalous ones, q is the upper anomalous point closest to the non-anomalous ones, d1 is the distance to the decision threshold of the non-anomalous point associated with said value p, and d2 is the distance from the decision threshold of the anomalous point associated with q.

Similarly, for the lower limit:

$$l\_min = p - abs(p-q)*(d1/(d1+d2))$$

wherein l_min is the lower limit, p is the value of the lower numerical variable of the non-anomalous point closest to the outliers, q is the lower outlier point closest to the non-anomalous ones, d1 is the distance to the decision threshold of the non-anomalous point associated with said value p, and d2 is the distance from the decision threshold of the anomalous point associated with q.

- Case 2: When there are anomalies above the non-anomalous points but not below them (as occurs for the day of the week "2" in Figures 1 and 2). In this case, the upper limit is calculated in the same way as in case 1, but for the lower point it is calculated as:

$$l\_min = p*e$$

wherein l_min is the lower limit, p is the value of the lower numeric variable of the non-anomalous point, and e is a predefined value less than 1.

- Case 3: When there are anomalies below the non-anomalous points but not above (as occurs for the day of the week "1" in Figures 1 and 2). In this case, we proceed to calculate the lower limit in the same way as in case 1, but for the upper limit, something analogous to case 2 is done:

$$l\_max = p*k$$

wherein l_max is the upper limit, p is the value of the numeric variable of the upper point of the non-anomalous ones, and k is a predefined value greater than 1.

- Case 4: When there are no anomalies for that combination of categorical variables (as occurs for day of week 5 in Figures 1 and 2). In this case, the lower and upper limits are defined as follows:

$$l\_min = p*e$$

$$l\_max = p*k$$

wherein l_min is the lower limit, p is the value of the lower numeric variable of the non-anomalous point, and e is a predefined value less than 1; and

wherein l_max is the upper limit, p is the value of the numeric variable of the upper point of the non-anomalous ones, and k is a predefined value greater than 1.

This approach contributes to Explainable AI or xAI because, although there are many xAI libraries available for supervised ML algorithms, there is almost none when it comes to unsupervised models.

Furthermore, the algorithm includes the calculation to find the optimal hyperparameters for the One-Class SVM model based on the scientific literature.

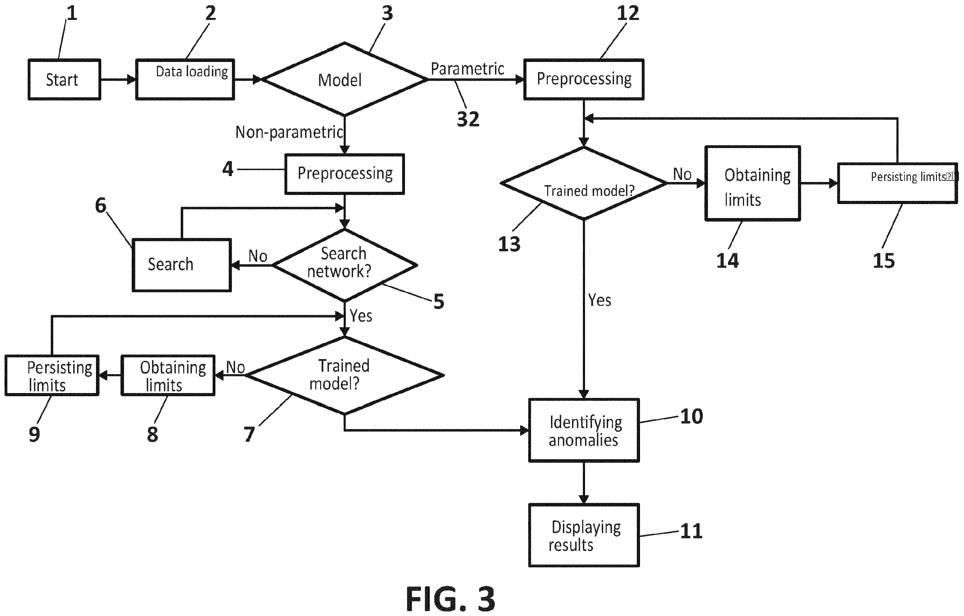

Figure 3 illustrates the flowchart of the algorithm previously described and which carries out the following step:

- Start (1):

The algorithm detects, for each data category (for example, day) that is received, if said data (for example, the total number of calls received on that day) is an anomalous point or if, on the contrary, it is not anomalous, i.e., falls within what is expected.

The input data to the algorithm can have the following fields, in an implementation example:

- **date:** date associated with that total calls

- **time:** time associated with that total calls

- **line_id:** receiving line identifier (customer CC line)

- **sevice_id:** service associated with that line

- **num_calls:** total number of calls received for that date and that slot (time slot, indicated in time)

- **client:** identifier of the client owner or Holder of that line

All input data is tabular data extracted from final tables or views provided by a relational data table; for example: calling number, call, line owner, call start time, call duration, origin of the call, etc.

- Data loading (2):

The data collected is tabular data from a relational database. The level of granularity is the number of total daily calls for each of the lines, although this algorithm is agnostic to data frequency, and can also work with lower frequencies (hours, minutes...).

- Choice of model (3)

The system can choose between applying a non-parametric anomaly detection model (31), for example, the previously described OneClass SVM, or using a classical method (32) that assumes a normal data distribution of the numerical values for each combination of values of the categorical variables.

- Preprocessing (4)

In the case of the non-parametric model (31), it is necessary to standardize the data (standardize and not normalize so as not to lose the information of the atypical values) and then extract the categorical features mentioned.

For data standardization, for example, the One-Class SVM model, which is sensitive to distances, can be applied. Since all the variables must have similar magnitudes, for this reason they are standardized, according to the equation below, subtracting the mean $\bar{X}$ of each variable X and dividing by its standard deviation S so that they all have a distribution of mean 0 and standard deviation 1, in order to be able to work with all of them together.

$$Z = \frac{X - \bar{X}}{S}$$

It is not normalized since normalization usually removes outliers, and this is just what is not of interest..

- search network (5):

At this point it is checked if the network search or grid search has been performed to find the hyperparameters of the OneClass SVM model.

To implement the search for the optimal configuration of the hyperparameter, methods known in the state of the data mining technique can be used, among which a method called MIES stands out (described by Y. Xiao , H. Wang , W. Xu , in "Parameter selection of Gaussian kernel for one-class SVM", IEEE Transactions on Cybernetics, Vol. 45, Issue 5, p.p. 941-953, 2015), which balances very well the simplicity of the method and the execution performance. MIES proposes a way to perform a "grid search" for OneClassSVM as long as the kernel used is RBF. MIES calculates the normalized distance, ND, from the data (target data) to the decision threshold, for both data points outside the decision threshold (edge patterns, EP), and within it (interior patterns, IP), and, with that information, it can be decided which combination of hyperparameters is optimal. For that purpose, it first calculates the ND for the IPs. The IPs must be as far away as possible from the decision threshold. This avoids underfitting, that is, that too many anomalies are detected, since the obtained decision threshold is not too close to the non-anomalous data points. Due to this, the optimal choice will be the one that maximizes this criterion. But that criterion alone is not enough because it clearly leads to overfitting due to the large non-anomalous space that is generated (and fewer anomalies are detected). Therefore, another criterion to consider is the ND for EPs. The decision threshold must be inferred by capturing the reality of the underlying data, to include that the EPs are as close as possible to the decision threshold.

- Grid or search (6):

An important aspect to consider at this point is that the OneClassSVM model uses two critical hyperparameters to perform the calculations that greatly affect the system's anomaly detection output. Those hyperparameters are as follows:

- Rejection rate: Defines the maximum limit for the fraction of points that can be considered an anomaly.
- Fraction for the limit of the number of support vectors, nu: Defines the minimum limit for the fraction of points that can be used as support vectors.

Those parameters define the commitment explained above:

- If the Rejection Rate is decreased, the space for non-anomalous points increases, there are fewer anomalies detected and this can lead to overfitting.
- If the Rejection Rate is increased, the space for non-anomalous points decreases, there are more anomalies detected and this can lead to underfitting.
- The nu parameter has a similar influence.

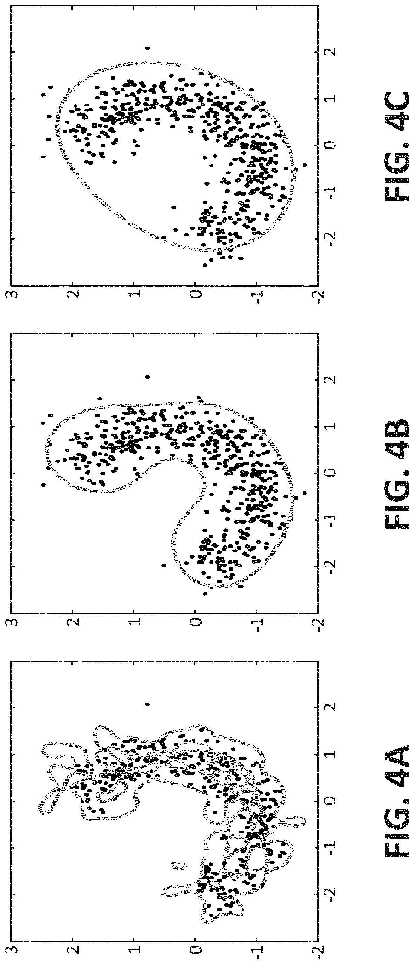

Figure 4 shows some examples of decision thresholds obtained for different use cases using the previously described and well-known MIES method. The example on the right, Figure 4(c), shows a decision threshold obtained by trying only to maximize the distance from the IPs to the decision threshold. The example on the left, Figure 4(a), shows a decision threshold obtained just by trying to minimize the distance from the EPs to the decision threshold. The optimal situation is that of the example illustrated in the center, Figure 4 (b) wherein both factors are taken into account.

This implies that the target function to be optimized is:

$$fo\ (s) = max\ ND(xi) - max\ ND(xj)$$

wherein xi is the interior patterns, xj is the edge patterns, and ND is the normalized distance. Max is the maximum value among the distances available for each of these groups.

This normalized distance is calculated according to the MIES equation:

$$d_N = \frac{d}{1 - d_\eta}$$

wherein dn is ND, d is the distance of each point and d_pi is the distance from the origin of hyperspace coordinates, OO, to the decision threshold.

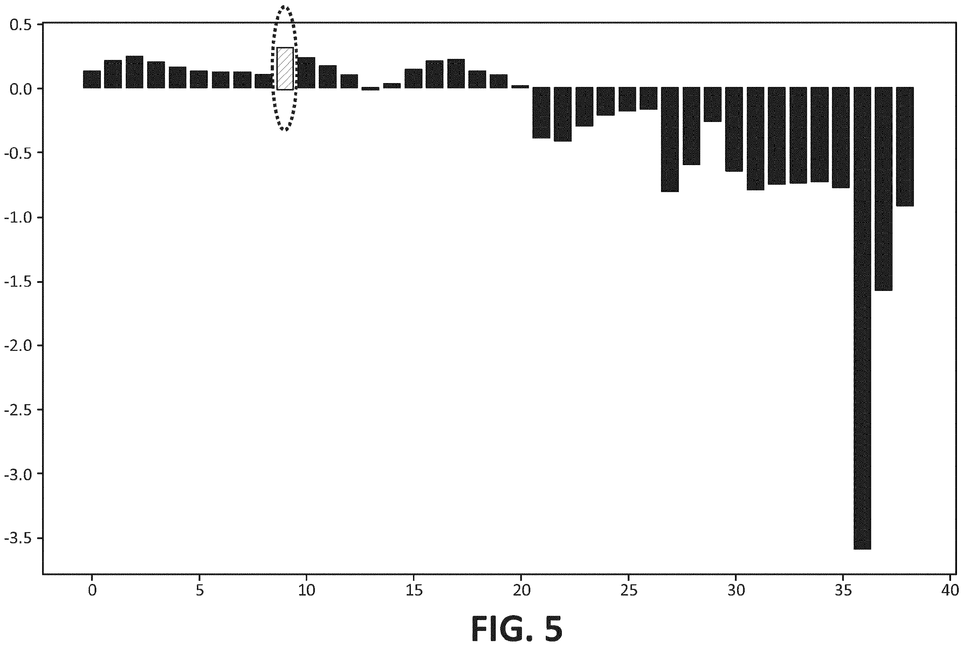

With all this, the developed implementation calculates the value of the utility function for a search network or "grid" of combinations of the two hyperparameters mentioned above using the results of the One-ClassSVM algorithm on the available historical data. By doing so, the results obtained are, for example, those shown in Figure 5. Once the results are obtained, the combination that maximizes the value obtained is selected. Figure 5 illustrates an example showing, on the vertical axis, the value of the evaluation results of the function used for different combinations of hyperparameters, each combination represented on the horizontal axis by an identifier value. The optimal case is the one framed in the dotted ellipse that corresponds, for this example, to a Rejection Rate value rejection_rate = 0.2 and a limit value of the number of support vectors nu = 0.1. After a certain point where the hyperparameters have huge values, the performance drops steadily (huge values lead to a large insufficiency involving too many detected anomalies, contributing to a larger maximum EP distance).

- Training of the non-parametric model (7)

With the hyperparameters already defined, the models are trained and a table with the data of the limits for each combination of values of the categorical variables used is generated and persisted.

- Obtaining limits (8)

First, the limits explained in previous points are obtained.

- Persisting limits (9)

Persistence of result tables in a relational database.

- Identifying anomalies (10)

Identification of anomalies, for a specific number of months, using the limits already calculated, comparing the results obtained in step 8 with the values of categorical variables of the data points of those months.

Although points 10 and 11 are being calculated in this sub-module for the case of the non-parametric model, they are agnostic to the type of method chosen and could be integrated for the case in which a parametric method is chosen, as explained in points 12, 13 and 14.

- Displaying results (11)

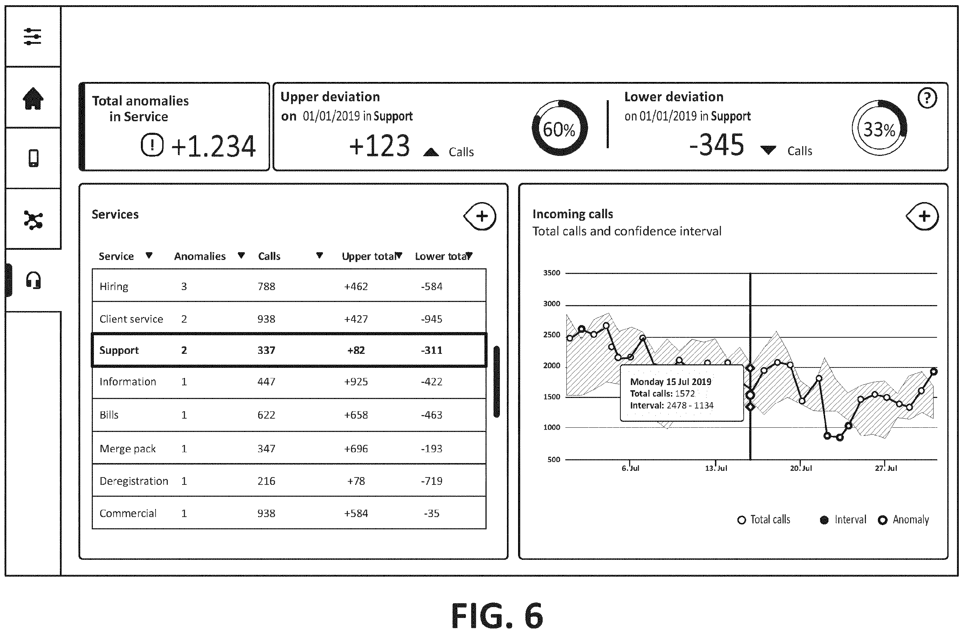

The display (11) shows the resulting data already de-standardized, expressed in their real magnitudes, to check and analyze what anomalies there are and how anomalous they are. For example, the results are displayed using a graphical user interface similar to the one shown in Figure 6.

- Preprocessing (12)

In the event that a method based on the normal distribution is used, separate data windows are extracted for each combination of values of the categorical variables (for example, using only the day of the week the data would be filtered to those of every Mondays , every Tuesday...).

- Training of the parametric model (13)

As such no training is done in this case because a supervised learning "model" is not used; therefore, at this point only a few tables are generated with what is obtained from the previous point of preprocessing (12) that become the input of the next point to obtain the limits of point (14) as described below.

- Obtaining limits (14)

The limits are extracted for each one of the tables obtained in the previous step considering as anomalies the points arising from a percentage of the distribution (usually 95%), defining the limits, maximum limit $\lim_{max}$ and minimum limit $\lim_{min,}$, depending on said percentage of data considered $\alpha$, the mean $\mu$ and the standard deviation $\sigma$ of the data distribution, according to the following equations:

$$\lim_{max} = \mu + a \times \sigma$$

$$\lim_{min} = \mu - a \times \sigma$$

- Persisting limits (15)

Limits are persisted analogously to step 9.
As alternative implementations, the possibility of the method working with less granular data is included, a situation in which the features associated with each data point can be richer, including, for example, the time associated with the calls received in the CC.

In alternative implementations, the number of features associated with each data point is increased to gain accuracy in anomaly detection by the model. Implementation based on the use of oversampling and/or undersampling techniques is also possible so that features that appear less commonly (for example, holidays) have greater relevance in the detection of anomalies by the algorithm.

In addition, although the non-parametric method is preferable, in another possible embodiment, the selection between the parametric method and the non-parametric method can be automated by performing a hypothesis test, checking if the data window for each of the combinations of values of categorical variables follows or not a normal distribution.

## Claims

1. A computer-implemented method for detecting anomalies in data communications comprising:

   - obtaining a set of data points from a relational database wherein each data point is defined by a datum that is a continuous numeric variable and at least one category of the datum that is a discrete numeric variable;
   - preprocessing (4) the obtained set of data points to introduce the set of data points into a non-parametric statistical model (31), standardizing the data and extracting at least one combination of categories from the datum;
   - performing a grid search (5, 6) to obtain at least one combination of hyperparameters with which to train (7) the non-parametric model (31);
   - applying a radial basis kernel function, RBF, to identify anomalies (10) in a given application time period using a non-linear decision threshold and upper and lower limits obtained (8, 14) by means of a statistical model to detect anomalies in a historical time period containing the given application time period, wherein the statistical model is selected (3) between the non-parametric model (31) and a parametric model (32), and wherein the statistical model persists (9 , 15) the upper and lower limits obtained (8, 14) in the relational database;
   - if the selected statistical model (3) is the non-parametric model (31), the used decision threshold is calculated according to the obtained hyperparameters and for each extracted combination of categories of the data, and the non-parametric model (31) calculates a distance from the continuous variable of the standardized data to the decision threshold value calculated for said variable and for each combination of values of the discrete variables of data categories;
   - displaying (11) in a graphical user interface results obtained from comparing the upper and lower limits obtained (8, 14) with statistical information associated with the set of data points, wherein the statistical information, if the selected statistical model (3) is the non-parametric model (31), is the distance calculated for each datum and combination of data categories.

2. The method according to claim 1, **characterized in that** the nonparametric model uses an unsupervised machine learning algorithm.

3. The method according to claim 2, **characterized in that** the unsupervised machine learning algorithm is the OneClass SVM algorithm.

4. The method according to claim 3, **characterized in that** the, at least one, hyperparameter is selected between a maximum limit for the fraction of points likely to be detected as an anomaly and a minimum limit for the fraction of points likely to be used as support vectors.

5. The method according to any of the preceding claims, **characterized in that** grid search (5, 6) uses the MIES procedure.

6. The method according to any of the preceding claims, **characterized in that** if the selected trained statistical model (3) is the non-parametric model (31), the upper and lower limits are obtained (8) as follows, for each combination of data categories:

   - when there are anomalies above and below the non-anomalous points, the upper limit is calculated as:

   $$l\_max = p + abs(p-q)*(d1/(d1+d2))$$

   wherein

      l_max is the upper limit,
      p is the value of the upper numerical variable of the non-anomalous point closest to the anomalous ones,
      q is the highest anomalous point closest to the non-anomalous ones, d1 is the distance from the decision threshold of the non-anomalous point associated with said value p, and
      d2 is the distance to the decision threshold of the anomalous point associated with q;

   and the lower limit is calculated as:

   $$l\_min = p - abs(p-q)*(d1/(d1+d2))$$

wherein

I_min is the lower limit,
p is the value of the lower numeric variable of the non-anomalous point closest to the anomalous ones,
q is the lowest anomalous point closest to the non-anomalous ones, d1 is the distance from the decision threshold of the non-anomalous point associated with said value p, and
d2 is the distance to the decision threshold of the anomalous point associated with q;

- when there are anomalies above the non-anomalous points but not below, the upper limit is calculated as:

$$I\_max = p + abs(p-q)*(d1/(d1+d2))$$

wherein

I_max is the upper limit r,
p is the value of the upper numerical variable of the non-anomalous point closest to the anomalous ones,
q is the highest anomalous point closest to the non-anomalous ones, d1 is the distance from the decision threshold of the non-anomalous point associated with said value p, and
d2 is the distance to the decision threshold of the anomalous point associated with q;

and the lower limit is calculated as:

$$I\_min = p*e$$

wherein

I_min is the lower limit,
p is the value of the lower numeric variable of the non-anomalous point, and
e is a predefined value lower than 1;

- when there are anomalies below the non-anomalous points but not above, the upper limit is calculated as:

$$I\_max = p*k$$

wherein

I_max is the upper limit,
p is the value of the numerical variable of the upper point of the non-anomalous, and k is a predefined value greater than 1;

and the lower limit is calculated as:

$$I\_min = p - abs(p-q)*(d1/(d1+d2))$$

wherein

I_min is the lower limit,
p is the value of the lower numeric variable of the non-anomalous point closest to the anomalous ones,
q is the lowest anomalous point closest to the non-anomalous ones, d1 is the distance from the decision threshold of the non-anomalous point associated with said value p, and
d2 is the distance to the decision threshold of the anomalous point associated with q;

- when there are no anomalies for the combination of data categories, the lower and upper limits are calculated, respectively, as follows:

$$I\_min = p*e$$

$$I\_max = p*k$$

wherein I_min is the lower limit, p is the value of the lower numeric variable of the non-anomalous point, and e is a predefined value lower than 1; and
wherein I_max is the upper limit, p is the value of the numeric variable of the upper point of the non-anomalous, and k is a predefined value greater than 1.

7. The method according to any of the preceding claims, **characterized in that** if the selected trained statistical model (3) is the parametric model (32), a normal distribution of the numerical variables of the data is applied for each value of the numerical variables of the combination of data categories, and the upper and lower limits are obtained (14) according to a given data percentage, and the mean and standard deviation of the normal distribution, wherein the given data percentage is used to calculate the parametric model (32) that considers anomalies the data points whose value of the numerical variables of the data is outside the upper and lower limits obtained for the same combination of numerical variables of data categories.

8. A computer program product comprising computer program code configured to perform the defined method according to any of the preceding claims, when said program code is executed on a computing device selected from: a computer; a digital signal processor, DSP; a field programmable gate array, FPGA; an application integrated circuit, a microprocessor and a microcontroller.

**9.** A non-transient computer-readable medium, **characterized in that** it comprises instructions for causing a computing device to perform the method defined according to any of claims 1-7.

## Patentansprüche

**1.** Mit Computer verwirklichtes Verfahren zum Erkennen von Anomalien in den Datenkommunikationen, aufweisend:

- das Erhalten eines Satzes von Datenpunkten aus einer relationalen Datenbank, wobei jeder Datenpunkt definiert wird durch einen Bezugswert, der eine kontinuierliche numerische Variable ist, und mindestens eine Kategorie des Bezugswertes, die eine diskrete numerische Variable ist;
- das Vorverarbeiten (4) des erhaltenen Satzes von Datenpunkten zum Einführen des Satzes von Datenpunkte in ein nicht-parametrisches, statistisches Modell (31), das die Daten standardisiert und mindestens eine Kombination von Kategorien aus den Bezugswert herauszieht;
- Durchführen einer Koordinatennetzsuche (5, 6), um mindestens eine Kombination von Hyperparametern zu erhalten, um mit denen das nicht-parametrische Modell (31) zu trainieren (7);
- Anwenden einer Radial-Basis-Kernfunktion (RBF) um Anomalien (10) in einem gegebenen Anwendungszeitraum unter Verwendung einer nichtlinearen Entscheidungsschwelle und Ober- und Untergrenzen zu ermitteln, die mit Hilfe eines statistischen Modells erhalten werden (8, 14), um die Anomalien in einer vergangenheitsbezogen Zeitperiode zu erkennen, die die gegebene Anwendungszeitperiode enthält, wobei das statistische Modell zwischen dem nicht-parametrischen Modell (31) und einem parametrischen Modell (32) ausgewählt wird (3), und wobei das statistische Modell die erhaltenen oberen und unteren Grenzwerte (8, 15) in der relationalen Datenbank beibehält (9, 14);
- wenn das ausgewählte statistische Modell (3) das nicht-parametrische Modell (31) ist, wird die verwendete Entscheidungsschwelle entsprechend den erhaltenen Hyperparametern und für jede ausgewählte Kombination von Kategorien der Daten berechnet, und das nicht-parametrische Modell (31) berechnet einen Abstand von der kontinuierlichen Variablen der standardisierten Daten zum Entscheidungsschwellenwert, der für diese Variable und für jede Kombination von Werten der diskreten Variablen der Datenkategorien berechnet wurde;
- Anzeigen (11) der Ergebnisse in einer grafischen Benutzerschnittstelle, die durch Vergleich der erhaltenen oberen und unteren Grenzen (8, 14) mit statistischen Informationen erhalten werden, die mit dem Satz von Datenpunkten verknüpft sind, wobei die statistische Information, wenn das ausgewählte statistische Modell (3) das nicht-parametrische Modell (31) ist, der für jeden Bezugswert und jede Kombination von Datenkategorien der errechnete Abstand ist.

**2.** Verfahren nach Anspruch 1, **dadurch gekennzeichnet, dass** das nicht-parametrische Modell einen nicht-überwachten, maschinellen Lernalgorithmus verwendet.

**3.** Verfahren nach Anspruch 2, **dadurch gekennzeichnet, dass** der nicht-überwachte maschinelle Lernalgorithmus der Ein-Klassen-SVM-Algorithmus ist.

**4.** Verfahren nach Anspruch 3, **dadurch gekennzeichnet, dass** der mindestens eine Hyperparameter zwischen einer Höchstgrenze für den Anteil der Punkte ausgewählt wird, um wahrscheinlich als eine Anomalie erkannt zu werden, und einer Mindestgrenze für den Anteil der Punkte, um wahrscheinlich als Stützvektoren verwendet zu werden.

**5.** Verfahren nach irgendeinem der vorhergehenden Ansprüche, **dadurch gekennzeichnet, dass** die Koordinatennetzsuche (5, 6) das MIES-Verfahren verwendet.

**6.** Verfahren nach irgendeinem der vorangehenden Ansprüche, **dadurch gekennzeichnet, dass**, wenn das ausgewählte, mit Leitwerken regulierte, statistische Modell (3) das nicht-parametrische Modell (31) ist, die oberen und unteren Grenzen wie folgt für jede Kombination von Datenkategorien erhalten werden (8):

- wenn es Anomalien über und unter den nicht-anomalen Punkten gibt, wird die Obergrenze wie folgt berechnet:

$$l\_max = p + abs(p-q)*(d1/(d1+d2))$$

wobei

l_max die Obergrenze ist,
p der Wert der oberen numerischen Variable des nicht-anomalen Punktes ist, der Punktes ist, der den anomalen Punkten am nächsten liegt,
q der höchste anomale Punkt ist, der den nicht-anomalen Punkten am nächsten liegt,
d1 der Abstand von der Entscheidungsschwelle des nicht-anomalen Punktes ist, der zu dem genannten Wert p dazugehört, und
d2 ist der Abstand zur Entscheidungsschwelle des anomalen Punktes, der zu dem Wert q dazugehört;

und die Untergrenze wird wie folgt berechnet:

$$l\_min = p - abs(p-q)*(d1/(d1+d2))$$

wobei

l_min die Untergrenze ist,
p der Wert der unteren, numerischen Variablen des nicht-anomalen Punktes ist, der den anomalen Punkten am nächsten liegt,
q der niedrigste anomale Punkt ist, der den nicht-anomalen Punkten am nächsten liegt,
d1 der Abstand von der Entscheidungsschwelle des nicht-anomalen Punktes, der zu dem genannten Wert p dazugehört, und
d2 ist der Abstand zur Entscheidungsschwelle des anomalen Punktes, der zu dem Wert q dazugehört;

- wenn es Anomalien oberhalb der nicht-anomalen Punkte gibt, aber nicht unterhalb, wird die Obergrenze wie folgt berechnet:

$$l\_max = p + abs(p-q)*(d1/(d1+d2))$$

wobei

l_max die Obergrenze ist,
p der Wert der oberen, numerischen Variable des nicht-anomalen Punktes ist, der den anomalen Punkten am nächsten liegt,
q der höchste, anomale Punkt ist, der den nicht-anomalen Punkten am nächsten liegt,
d1 der Abstand von der Entscheidungsschwelle des nicht-anomalen Punktes, der zu dem genannten Wert p dazugehört, und
d2 ist der Abstand zur Entscheidungsschwelle des anomalen Punktes, der zu dem Wert q dazugehört;

und die Untergrenze wird wie folgt berechnet:

$$l\_min = p*e$$

wobei

l_min die Untergrenze ist,
p der Wert der unteren, numerischen Variable des nicht-anomalen Punktes ist, und
e ein vordefinierter Wert kleiner als 1 ist;

- wenn es Anomalien unterhalb der nicht-anomalen Punkte gibt, aber nicht oberhalb, wird die Obergrenze wie folgt berechnet:

$$l\_max = p*k$$

wobei

l_max die Obergrenze ist,
p der Wert der numerischen Variable des oberen Punktes, der nicht-anomal ist, und
k ein vordefinierter Wert größer als 1 ist;

und die Untergrenze wird wie folgt berechnet:

$$l\_min = p - abs(p-q)*(d1/(d1+d2))$$

wobei

l_min die Untergrenze ist,
p der Wert der unteren, numerischen Variable des nicht-anomalen Punktes ist, der den anomalen Punkten am nächsten liegt,
q der niedrigste anomale Punkt ist, der den nicht-anomalen Punkten am nächsten liegt,
d1 der Abstand von der Entscheidungsschwelle des nicht-anomalen Punktes, der zu dem genannten Wert p dazugehört, und
d2 der Abstand zur Entscheidungsschwelle des anomalen Punktes ist, der zu dem Wert q dazugehört;

- wenn es keine Anomalien für die Kombination von Datenkategorien gibt, werden die Unter- und Obergrenzen wie folgt berechnet:

$$l\_min = p*e$$

$$l\_max = p*k$$

wobei l_min die Untergrenze ist, p der Wert der unteren, numerischen Variablen des nicht-anomalen Punktes ist und e ein vordefinierter Wert kleiner als 1 ist; und wobei l_max die Obergrenze ist, p der Wert der numerischen Variablen des oberen Punktes, der nicht-anomal ist, und k ein vordefinierter Wert größer als 1 ist.

7. Verfahren nach irgendeinem der vorhergehenden Ansprüche, **dadurch gekennzeichnet, dass**, wenn das ausgewählte, mit Leitwerken regulierte, statistische Modell (3) das parametrische Modell (32) ist, wird eine Normalverteilung der numerischen Variablen der Daten angewandt für jeden Wert der numerischen Variablen der Kombination von Datenkategorien, und die Ober- und Untergrenzen werden entsprechend einem gegebenen Datenprozentsatz, und dem Mittelwert und der Standardabweichung der Normalverteilung erhalten (14), wobei der gegebene Datenprozentsatz verwendet wird, um das parametrische Modell (32) zu berechnen, das die Datenpunkte als Anomalien betrachtet, deren Wert der numerischen Variablen der Daten außerhalb der Ober- und Untergrenzen liegen, die für dieselben Kombination von numerischen Variablen von Datenkategorien erhalten werden.

8. Computerprogramm-Produkt, das einen Computerprogrammcode aufweist, der ausgebildet ist, um das definierte Verfahren nach irgendeinem der vorhergehenden Ansprüche auszuführen, wenn der Programmcode auf einer Rechenvorrichtung ausgeführt wird, die ausgewählt ist aus: einem Computer; einem digitalen Signalprozessor (DSP), einem feldprogrammierbaren Gate-Array (FPGA), einem integrierten Anwendungsschaltkreis, einem Mikroprozessor und einem Mikrocontroller.

9. Ein nicht-flüchtiges computerlesbares Medium, **dadurch gekennzeichnet, dass** es Anweisungen aufweist, um eine Rechenvorrichtung zu veranlassen, das nach einem der Ansprüche 1-7 festgelegte Verfahren auszuführen.

**Revendications**

1. Procédé mis en oeuvre par ordinateur pour détecter des anomalies lors de communications de données comprenant :

   - l'obtention d'un ensemble de points de données à partir d'une base de données relationnelle dans laquelle chaque point de données est défini par un datum qui est une variable numérique continue et au moins une catégorie du datum qui est une variable numérique discrète ;
   - le prétraitement (4) de l'ensemble de points de données obtenu pour introduire l'ensemble de points de données à l'intérieur d'un modèle statistique non paramétrique (31) qui standardise les données et extrait au moins une combinaison de catégories à partir du datum ;
   - la réalisation d'une recherche quadrillée (5, 6) pour obtenir au moins une combinaison d'hyperparamètres avec lesquels le modèle non paramétrique (31) sera soumis à entraînement (7) ;
   - l'application d'une fonction noyau à base radiale, RBF, pour identifier des anomalies (10) dans une période temporelle d'application donnée en utilisant un seuil de décision non linéaire et des limites supérieure et inférieure obtenues (8, 14) au moyen d'un modèle statistique afin de détecter des anomalies dans une période temporelle historique contenant la période temporelle d'application donnée, dans lequel le modèle statistique est sélectionné (3) entre le modèle non paramétrique (31) et un modèle paramétrique (32), et dans lequel le modèle statistique conserve (9, 15) les limites supérieure et inférieure obtenues (8, 14) dans la base de données relationnelle ;
   - si le modèle statistique sélectionné (3) est le modèle non paramétrique (31), le seuil de décision utilisé est calculé conformément aux hyperparamètres obtenus pour chaque combinaison extraite de catégories des données, et le modèle non paramétrique (31) calcule une distance depuis la variable continue des données standardisées jusqu'à la valeur de seuil de décision calculée pour ladite variable et pour chaque combinaison de valeurs des variables discrètes de catégories de données ;
   - l'affichage (11), dans une interface utilisateur graphique, de résultats obtenus à partir de la comparaison des limites supérieure et inférieure obtenues (8, 14) avec une information statistique associée à l'ensemble de points de données, dans lequel l'information statistique, si le modèle statistique sélectionné (3) est le modèle non paramétrique (31), est la distance calculée pour chaque datum et chaque combinaison de catégories de données.

2. Procédé selon la revendication 1, **caractérisé en ce que** le modèle non paramétrique utilise un algorithme d'apprentissage automatique non supervisé.

3. Procédé selon la revendication 2, **caractérisé en ce que** l'algorithme d'apprentissage automatique non supervisé est l'algorithme SVM à une seule classe.

4. Procédé selon la revendication 3, **caractérisé en ce que** l'au moins un hyperparamètre est sélectionné entre une limite maximum pour la fraction de points susceptibles d'être détectés en tant qu'anomalie et une limite minimum pour la fraction de points susceptibles d'être utilisés en tant que vecteurs de support.

5. Procédé selon l'une quelconque des revendications précédentes, **caractérisé en ce que** la recherche quadrillée (5, 6) utilise la procédure MIES.

6. Procédé selon l'une quelconque des revendications précédentes, **caractérisé en ce que**, si le modèle statistique entraîné sélectionné (3) est le modèle non paramétrique (31), les limites supérieure et inférieure sont obtenues (8) comme suit, pour chaque combinaison de catégories de données :

- lorsqu'il y a des anomalies au-dessus et au-dessous des points non en anomalie, la limite supérieure est calculée comme suit :

$$l\_max = p + abs(p{-}q)*(d1/(d1{+}d2))$$

où :

l_max est la limite supérieure,
p est la valeur de la variable numérique supérieure du point non en anomalie le plus proche de ceux en anomalie,
q est le point en anomalie le plus haut le plus proche de ceux non en anomalie,
d1 est la distance depuis le seuil de décision du point non en anomalie associé à ladite valeur p, et
d2 est la distance jusqu'au seuil de décision du point en anomalie associé à q ;
et la limite inférieure est calculée comme suit :

$$l\_min = p - abs(p{-}q)*(d1/(d1{+}d2))$$

où :

l_min est la limite inférieure,
p est la valeur de la variable numérique inférieure du point non en anomalie le plus proche de ceux en anomalie,
q est le point en anomalie le plus bas le plus proche de ceux non en anomalie,
d1 est la distance depuis le seuil de décision du point non en anomalie associé à ladite valeur p, et
d2 est la distance jusqu'au seuil de décision du point en anomalie associé à q ;

- lorsqu'il y a des anomalies au-dessus des points non en anomalie mais pas au-dessous, la limite supérieure est calculée comme suit :

$$l\_max = p + abs(p{-}q)*(d1/(d1{+}d2))$$

où :

l_max est la limite supérieure,
p est la valeur de la variable numérique supérieure du point non en anomalie le plus proche de ceux en anomalie,
q est le point en anomalie le plus haut le plus proche de ceux non en anomalie,
d1 est la distance depuis le seuil de décision du point non en anomalie associé à ladite valeur p, et
d2 est la distance jusqu'au seuil de décision du point en anomalie associé à q ;
et la limite inférieure est calculée comme suit :

$$l\_min = p*e$$

où :

l_min est la limite inférieure,
p est la valeur de la variable numérique inférieure du point non en anomalie, et
e est une valeur prédéfinie inférieure à 1 ;

- lorsqu'il y a des anomalies au-dessous des points non en anomalie mais pas au-dessus, la limite supérieure est calculée comme suit :

$$l\_max = p*k$$

où :

l_max est la limite supérieure,
p est la valeur de la variable numérique du point supérieur de ceux non en anomalie, et
k est une valeur prédéfinie supérieure à 1 ;
et la limite inférieure est calculée comme suit :

$$l\_min = p - abs(p{-}q)*(d1/(d1{+}d2))$$

où :

l_min est la limite inférieure,
p est la valeur de la variable numérique inférieure du point non en anomalie le plus proche de ceux en anomalie,
q est le point en anomalie le plus bas le plus proche de ceux non en anomalie,

d1 est la distance depuis le seuil de décision du point non en anomalie associé à ladite valeur p, et

d2 est la distance jusqu'au seuil de décision du point en anomalie associé à q ;

- lorsqu'il n'y a pas d'anomalies pour la combinaison de catégories de données, les limites inférieure et supérieure sont respectivement calculées comme suit :

$$l\_min = p*e$$

$$l\_max = p*k$$

où l_min est la limite inférieure, p est la valeur de la variable numérique inférieure du point non en anomalie et e est une valeur prédéfinie inférieure à 1 ; et

où l_max est la limite supérieure, p est la valeur de la variable numérique du point supérieur de ceux non en anomalie, et k est une valeur prédéfinie supérieure à 1.

7. Procédé selon l'une quelconque des revendications précédentes, **caractérisé en ce que**, si le modèle statistique entraîné sélectionné (3) est le modèle paramétrique (32), une distribution normale des variables numériques des données est appliquée pour chaque valeur des variables numériques de la combinaison de catégories de données, et les limites supérieure et inférieure sont obtenues (14) conformément à un pourcentage de données donné, et à la moyenne et à l'écart type de la distribution normale, dans lequel le pourcentage de données donné est utilisé pour calculer le modèle paramétrique (32) qui considère en tant qu'anomalies les points de données dont la valeur des variables numériques des données est à l'extérieur des limites supérieure et inférieure obtenues pour la même combinaison de variables numériques de catégories de données.

8. Produit de programme informatique comprenant un code de programme informatique configuré pour réaliser le procédé défini selon l'une quelconque des revendications précédentes, lorsque ledit code de programme est exécuté sur un dispositif informatique sélectionné parmi : un ordinateur ; un processeur de signal numérique, DSP ; un réseau prédiffusé programmable par l'utilisateur, FPGA ; un circuit intégré à application, un microprocesseur et un microcontrôleur.

9. Support non transitoire lisible par ordinateur, **caractérisé en ce qu'**il comprend des instructions pour forcer un dispositif informatique à réaliser le procédé défini selon l'une quelconque des revendications 1 à 7.

FIG. 1

FIG. 2

FIG. 3

**FIG. 4A**   **FIG. 4B**   **FIG. 4C**

FIG. 5

**Total anomalies in Service**

(!) +1.234

**Upper deviation**
**on** 01/01/2019 in **Support**

+123 ▲ Calls

60%

**Lower deviation**
on 01/01/2019 in **Support**

-345 ▼ Calls

33%

(?)

**Services** (+)

| Service ▼ | Anomalies ▼ | Calls ▼ | Upper total▼ | Lower total▼ |
|---|---|---|---|---|
| Hiring | 3 | 788 | +462 | -584 |
| Client service | 2 | 938 | +427 | -945 |
| **Support** | **2** | **337** | **+82** | **-311** |
| Information | 1 | 447 | +925 | -422 |
| Bills | 1 | 622 | +658 | -463 |
| Merge pack | 1 | 347 | +696 | -193 |
| Deregistration | 1 | 216 | +78 | -719 |
| Commercial | 1 | 938 | +584 | -35 |

**Incoming calls** (+)
Total calls and confidence interval

3500
3000
2500
2000
1500
1000
500

6. Jul    13. Jul    20. Jul    27. Jul

Monday 15 Jul 2019
Total calls: 1572
Interval: 2478 - 1134

○ Total calls    ● Interval    ◎ Anomaly

EP 4 006 791 B1

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GILPIN, LH et al.** Explaining Explanations: An Overview of Interpretability of Machine Learning. *2018 IEEE 5th International Conference on Data Science and Advanced Analytics (DSAA),* October 2018, 80-89
- **GUIDOTTI, R. et al.** A survey of methods for explaining black box models. *ACM computing surveys (CSUR),* 2018, vol. 51 (5), 93
- **JUNSHUI MA ; SIMON PERKINS.** *Time-series Novelty Detection Using One-class Support Vector Machines,* 2003
- **WANG SIQI et al.** Hyperparameter selection of one-class support vector machine by self-adaptive data shifting. *PATTERN RECOGNITION,* 01 February 2018, vol. 74, 198-211
- **Y. XIAO ; H. WANG ; W. XU.** Parameter selection of Gaussian kernel for one-class SVM. *IEEE Transactions on Cybernetics,* 2015, vol. 45 (5), 941-953